Europäisches Patentamt

European Patent Office

Office européen des brevets

(19)

(11) EP 0 539 653 B1

(12) **EUROPÄISCHE PATENTSCHRIFT**

(45) Veröffentlichungstag und Bekanntmachung des Hinweises auf die Patenterteilung:
15.09.1999 Patentblatt 1999/37

(51) Int Cl.⁶: **G06T 7/00**

(21) Anmeldenummer: 92108926.4

(22) Anmeldetag: 27.05.1992

(54) **Verfahren und Anordnung zur Detektion von kleinen Objekten in natürlicher Umgebung**

Detecting method and device of small objects in a natural environment

Méthode et dispositif de détection de petits objets dans un environnement naturel

(84) Benannte Vertragsstaaten:
DE FR GB IT

(30) Priorität: 22.06.1991 DE 4120676

(43) Veröffentlichungstag der Anmeldung:
05.05.1993 Patentblatt 1993/18

(73) Patentinhaber: LFK Lenkflugkörpersysteme GmbH
81663 München (DE)

(72) Erfinder:
• Coy, Dieter, Dr.-Ing.
W-2000 Wedel (DE)
• Nahapetian, Vahe
W-2000 Wedel (DE)

(74) Vertreter: **Hummel, Adam et al**
**Daimler-Benz AG**
**FTP/M**
**Postfach 80 04 65**
**81663 München (DE)**

(56) Entgegenhaltungen:
US-A- 4 760 541

• JOURNAL OF THE OPTICAL SOCIETY OF AMERICA - A, Bd.2, Nr.11, November 1985, NEW YORK US Seiten 1857 - 1862 JORGE L.C. SANZ ET AL. 'Automated digital visual inspection with dark-field microscopy'
• PROCEEDINGS OF THE CONFERENCE ON PATTERRN RECOGNITION AND IMAGE PROCESSING, JUNI 6-8, 1977 NEW YORK (US) ; IEEE 1977 Seiten 70 - 75 A.M. SAVOL ET AL. 'An algorithm for the detection of small, rounded opacities in chest X-rays with early pneumoconiosis'

**Beschreibung**

Die Erfindung betrifft ein Verfahren und eine Schaltungsanordnung zur Detektion von kleinen Objekten in natürlicher Umgebung unter Verwendung eines die Umgebung abtastenden elektrooptischen Sensors mit nachgeordneter Auswerteeinheit und gegebenenfalls vorgesehener Bilddarstellungseinrichtung.

Aus der US 4 760 541 ist ein zweidimensionales digitales Raumfilter zur Verstärkung von Punktquellen, d.h. der Erfassung von Punktquellensignalen in der Gegenwart von Hintergrundrauschen bekannt. Es wird die Güte einer zentralen Punktquelle oder eines Pixels bestimmt, um dadurch Punktquellen zu erfassen und Signale von anderen Quellen als der gewünschten Punktquelle zu minimieren. Dieses Raumfilter umfaßt eine Puffereinrichtung zum Empfang von Pixelsignalen und eine Speichereinrichtung zur Speicherung von Pixeldaten für ein Testpixel und umgebende Pixel, eine Vergleichseinrichtung zum Vergleich von Testpixelwerten mit einer gegebenen Anzahl umgebender Pixelwerte, um zu bestimmen, ob das Testpixel ein lokaler Maximal- oder Minimalwert ist. Zudem ist eine Subtraktionseinrichtung zur Subtraktion des Werts des nachstwertigen umgebenden Pixels vom Testpixelwert, wenn das Testpixel als ein lokales Maximum oder Minimum bestimmt wird, und eine Vorrichtung zur Anzeige des Unterschieds zwischen dem Wert des Testpixels und dem des umgebenden Pixels mit dem nächsten Wert ausgebildet. Der Unterschiedswert wird ein Filterausgangssignal und dient zur Erstellung eines Werts für die Punktquellensignalintensität, der dann mit einem Schwellenwert verglichen wird, um ein Erfassungsflag zu erzeugen.

Jedes natürliche Bild enthält "Spitz-Lichter", die sich im Kontrast von ihrer unmittelbaren Umgebung unterscheiden. Dies gilt mehr oder weniger für viele Objekte im Bild, jedoch haben kleinere Objekte bestimmte Symmetrieeigenschaften, die große Objekte nicht haben. Z.B. hat ein heller gerader Ast eines Baumes in einem Bild vor dunklem Hintergrund helle Nachbarbildpunkte entlang der Hauptachse des Astes und dunkle Nachbarbildpunkte senkrecht dazu. In einem anderen Beispiel hat eine helle Gasblase in einer Flüssigkeit dunkle Nachbarbildpunkte in allen Richtungen. Heuristisch hat also die Gasblase eine Punktsymmetrie und der Ast eine Spiegelsymmetrie. Ein ganzer Baum in einer Landschaft hat dagegen "wenig " Symmetrie, ein Stern am Nachthimmel dagegen eine vollständige "Punkt"-Symmetrie. Es scheint daher prinzipiell möglich, Blasen in einer Flüssigkeitsumgebung ebenso wie Sterne am teilweise bedeckten Nachthimmel zu entdekken.

Der Erfindung liegt demgegenüber die Aufgabe zugrunde, ein Verfahren und eine Schaltungsanordnung der eingangs genannten Art zu schaffen, mit denen kleine kompakte Objekte aus ihrer natürlichen Umgebung (aus Bildsequenzen) extrahiert und nahezu alle übrigen irrelevanten Hintergrundinformationen des Bildes unterdrückt werden können.

Die Aufgabe wird erfindungsgemäß durch die Merkmale des Anspruchs 1 bzw. Anspruchs 8 gelöst.

Von besonderem Vorteil ist, daß durch die Erfindung unter Anwendung von Symmetrie-Prinzipien und Statistiken eine bestmögliche Extraktion von kleinen Objekten ohne einen großen schaltungstechnischen Aufwand erzielt wird. Es werden Verfahrensschritte angegeben, durch die die spezifische Umgebung jedes Bildpunktes(Pixel) im Bild analysiert wird. Hierbei werden die Umgebungen entsprechend den verschiedenen Symmetrieachsen der zu detektierenden Objekte gewählt. In der Praxis haben die Objekte natürlich keine perfekte Symmetrie, zusätzlich sind die Hintergründe verrauscht und stark unterschiedlich. Damit entsteht eine sehr unterschiedliche Anzahl von Objekten entsprechend der Qualität und dem Inhalt der Vielfalt der Bilder. Um nun eine gleichförmige Arbeitsweise für unterschiedliche Bilder zu erreichen, wird eine geeignete Regelung eingeführt, so daß die Anzahl detektierter Objekte auf einen statistisch vernünftigen Bereich begrenzt wird.

Ausgestaltungen der Erfindung sind in den Unteransprüchen 2 bis 7 bzw. 9 bis 12 beschrieben.

Das Verfahren selbst wird dabei in folgende Schritte gegliedert:

a) Das ankommende Bild wird zuerst durch ein zweidimenisonales FIR-Filter geschickt, um weißes Rauschen zu reduzieren.

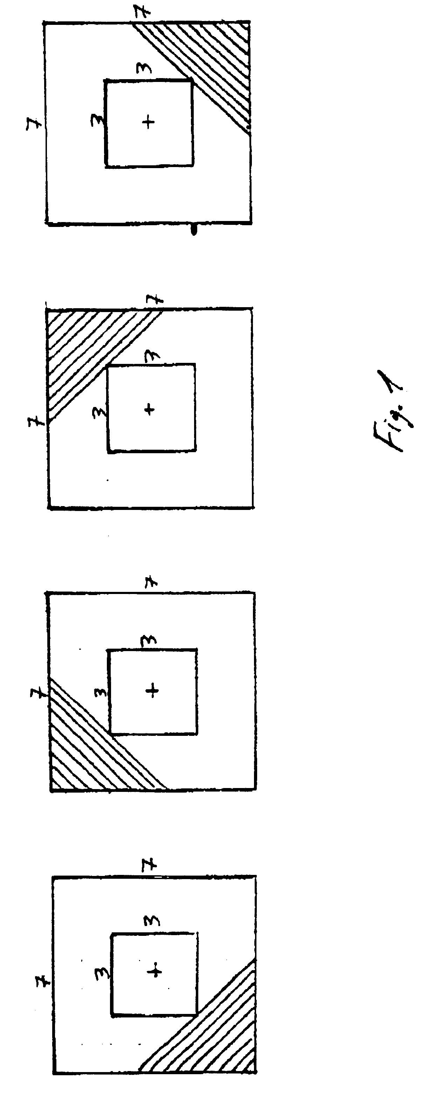

b) Das so gefilterte Bild wird weiter verarbeitet von vier nichtlinearen Filtern, die parallel arbeiten. Diese Filter wirken innerhalb eines Bereiches von z. B. 7 x 7 Bildpunkten (Pixeln). Die Filter finden das Maximum und Minimum der Grauwerte einer Gruppe von Bildpunkten (Pixeln), die jeweils in den Ecken des 7 x 7 Bereiches (Matrix) angesiedelt sind. Die spezielle Auswahl der verschiedenen Bildpunktgruppen ist aus Fig. 1 (schraffierte Dreiecke) zu entnehmen.

Zur Vereinfachung soll die dreieckförmige Gruppe von Bildpunkten fortan **Referenzmege** heißen. Dieser Verarbeitungsschritt berücksichtigt die Symmetrieerfordernisse zur Detektion kleiner, kompakter Objekte. Für zweidimensionale Objekte sind mindestens drei Referenzmengen und daher mindestens drei parallele Filterzweige erforderlich.

c) Im nächsten Schritt werden in jedem Filterzweig die Ergebnisse der Maxima- und Minimaberechnungen mit dem aktuellen Bildpunkt(Pixel) im Zentrum der Matrix verglichen.

Eine Markierung des zentralen Bildpunktes, d. h. des dem jeweiligen Matrixmittelpunkt entsprechenden Pixels als signifikant und ihr Eintrag in das Zwischenergebnisbild des Filterzweiges erfolgt, wenn die Kriterien

$$P - M > T \qquad (K1)$$

und

$$M - m < L \qquad (K2)$$

erfüllt sind.

Dabei bedeuten:

P: Intensität des zentralen Bildpunktes

M: Maximum der Intensitäten der Referenzmenge

m: Minimum der Intensitäten der Referenzmenge

T: dynamischer Schwellwert

L: fester Schwellwert

Der Sinn dieses Verarbeitungsschrittes besteht darin, den zentralen Bildpunkt(Pixel) zu markieren, wenn sowohl der Bildpunkt um einen dynamischen Schwellwert T heller als sein Umgebung ist und seine Umgebung nicht zu stark strukturiert ist (fester Schwellwert L für Differenz M-m als Maß für die Streuung)

d) Die markierten Punkte in den Zwischenergebnisbildern werden dilatiert, d. h. auf 3 x 3 Pixel vergrößert. Dies dient der Vorbereitung auf den nächsten Schritt.

e) Die UND-Verknüpfung sämtlicher Ergebnisbilder aus Schritt d) liefert das Endergebnis. Die Schritte d), und e) stellen die Kombination der Filterergebnisse aus Schritt c) dar. Da jedoch aus Gründen unvollkommener Symmetrie nicht alle Filterzweige dasselbe Pixel markieren, ist Schritt d) vor der UND-Verknüpfung erforderlich.

f) Die Anzahl der markierten Pixel in jedem Filterzweig soll nicht zu groß oder zu klein sein. Um kontrastreiche und kontrast-arme Szenen gleichmäßig gut verarbeiten zu können, ist eine Regelung erforderlich. Diese Regelung kontrolliert die Anzahl markierter Pixel in jedem Zwischenergebnisbild derart, daß die Anzahl ungefähr konstant bleibt.

Der Schwellwert T wird dazu von Bild zu Bild inkrementiert oder decrementiert bis das Kriterium

$$N_{min} < n < N_{max} \qquad (K3)$$

oder

$$T_{min} < T < T_{max} \qquad (K4)$$

erfüllt ist.

Dabei bedeuten:

n: Anzahl markierter Pixel in einem Filterzweig

$N_{min}$: untere Schranke

$N_{max}$: obere Schranke

$T_{min}, T_{max}$: unterer und oberer absoluter Grenzwert für T

$N_{min}, N_{max}$: sind nur abhängig von der Bildgröße.

Eine Schaltungsanordnung zur Durchführung des Verfahrens sowie Weiterbildungen der Schaltungsanordnung sind im Anspruch 8 bzw. in den Unteransprüchen 9 bis 12 beansprucht.

In der Zeichnung ist ein Ausführungsbeispiel der Erfindung dargestellt und zwar zeigt

Fig. 1 die Darstellung von vier verschiedenen Referenzmengen zur Erläuterung des Verfahrens,
Fig. 2 eine Schaltungsanordnung zur Durchführung des erfindungsgemäßen Verfahrens in Blockschaltbildform, und
Fig. 3 ein Blockschaltbild des Ergebnisprozessors aus Fig. 2.

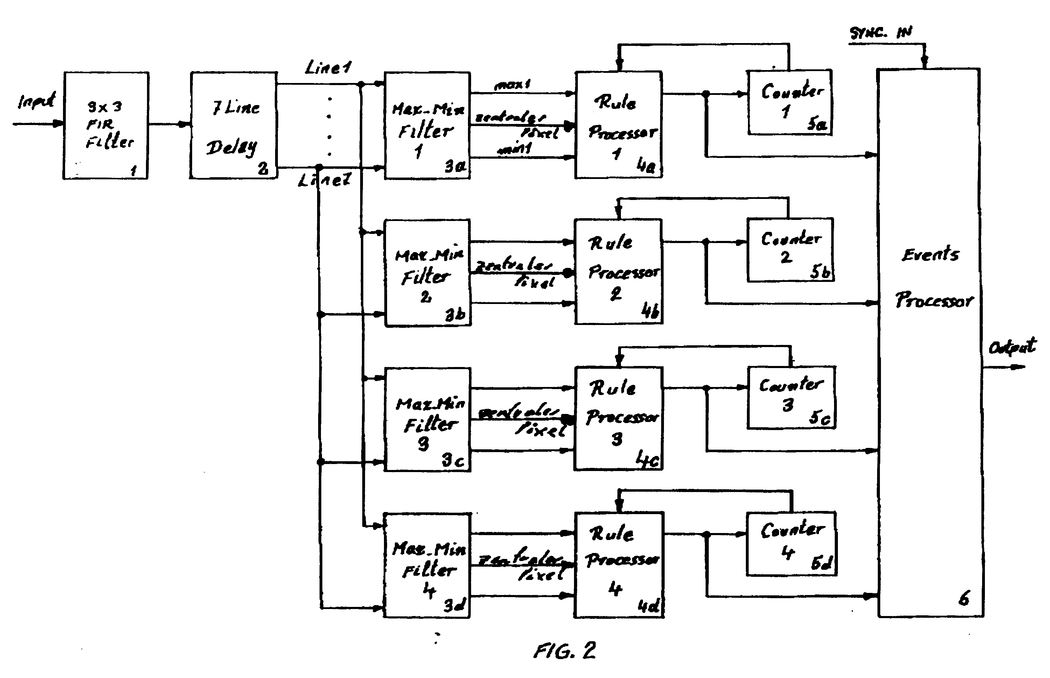

Gemäß Fig. 2 wird ein von einem zeichnerisch nicht dargestellten elektrooptischen Sensor geliefertes digitalisiertes Bild von einem 3 x 3 FIR-Filter 1 geglättet und anschließend über eine Zeitverzögerungsschaltung 2, beispielsweise einen 7-Zeilen-Verzögerungsblock, den Eingängen von vier parallelen Maximum-Minimum-Filtern 3a bis 3d zugeführt. Diese Filter erweitern jede verzögerte Bildzeile um weitere sieben Pixel mittels zeichnerisch nicht dargestellter Register, so daß 48 Nachbarpunkte jedes zentralen Bildpunktes, d. h. dem Matrixmittelpunkt entsprechenden Pixels, intern verfügbar sind (7 x 7 Matrix). Mittels ebenfalls nicht gezeichneter kaskadierter Komparatoren und Multiplexer werden aus den verzögerten Bild-signalen vier verschiedene Referenzmengen geformt. Diese Referenzmengen können entsprechend der Darstellung aus Fig. 1 an den vier Ecken einer 7 x 7 großen quadratischen Matrix angeordnet sein.

Mittels der Komparatoren und Multiplexer ermittelt jedes Filter 3a bis 3d das Maximum und Minimum der aktuellen Helligkeitswerte aus jeder Referenzmenge. Diese ermittelten vier Maxima und vier Minima werden mit dem durch die Matrix gekennzeichneten zentralen Bildpunkt(Pixel) verglichen, d. h. mit dem jeweiligen dem Matrixmittelpunkt entsprechenden Pixel.

Dieser zentrale Punkt bzw. dieses dem Matrixmittelpunkt entsprechend Pixel wird genau dann markiert, wenn die zwei Kriterien K1 und K2 erfüllt sind. D. h. erstens dann, wenn der aktuelle zentrale Bildpunkt bzw. dieses Pixel um einen dynamischen Schwellwert T heller als das Maximum der zugehörigen Referenzmenge ist und zweitens, wenn die Differenz zwischen Maximum und Minimum der zugehörigen Referenzmengen kleiner als der vorgegebene feste Schwellwert L ist. Hierzu dienen die Regelprozessoren 4a bis 4d, bei denen es sich um einfache Subtrahierer und Komparatoren handelt, die Bildpunktintensitätswerte verwenden sowie Register zur Speicherung von im vorangegangenen Bild ermittelten Schwellen $T_a$ bis $T_d$ und Schranken $N_{max}$, $N_{min}$ enthalten, um die Bildpunkte bzw. Pixel zu markieren und an den Ergebnisprozessor 6 weiter zu geben. Die markierten Bildpunkte bzw. Pixel werden fortan als Mengenelemente bezeichnet.

Diese Mengenelemente n werden auch den, den Regelprozessoren 4a bis 4d nachgeordneten Zählern für n 5a bis 5d als Takte zugeführt, um die dynamischen Schwellwerte T für die nächsten Bilder in den Regelprozessoren 4a bis 4d einzustellen. Dies geschieht durch Vergleich des aktuellen Mengenelementzählerstandes, n, mit dem festen Wert der unteren und oberen Schranken, Nmax, Nmin, gemäß Kriterium K3, die in Registern innerhalb der vier Zählblöcke 5a bis 5d gespeichert sind. Eine Regelung der dynamischen Schwellwerte T kann gemäß Kriterium K3 derart durchgeführt werden,

- daß die Schwellwerte T erhöht werden, wenn die aktuellen Zählergebnisse n größer als die obere Schranke $N_{max}$ sind,
- daß die Schwellwerte T erniedrigt werden, wenn die aktuellen Zählergebnisse n kleiner als die untere Schranke $N_{min}$ sind, und
- daß die Schwellwerte T unverändert bleiben, wenn die aktuellen Zählergebnisse n innerhalb des von der oberen und unteren vorgegebenen Schranke definierten Bereiches liegen oder gleich der unteren bzw. oberen vorgegebenen Schranke sind.

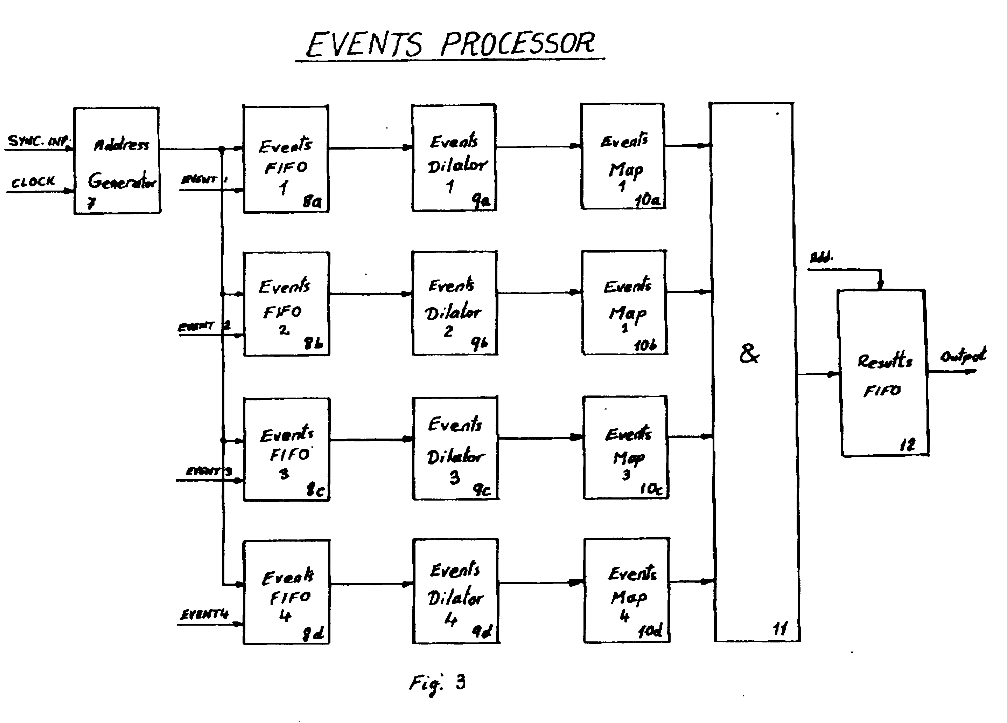

Die Mengenelemente aller vier Zwischenergebnisbilder werden dilatiert und in dem Ergebnisprozessor 6 zu einer End-Ergebnismenge UND-verknüpft als detektierte Bildpunkte bzw. Pixel. In einem im Ergebnisprozessor vorhandenen Ausgangsspeicher 12 (vgl. Fig. 3) werden die Koordinatenwerte der End-Ergebnis-Mengenelemente gespeichert.

Wie aus Fig. 3 ersichtlich ist, besteht der Ergebnisprozessor 6

- aus einem Adressen-Generator 7, dessen Synchron-Eingang mit dem Takteingang kombiniert ist, um die erforderlichen Bildpunkt- bzw. Pixeladressen zu erzeugen,
- aus an den Ausgang des Adressen-Generators 7 angeschlossenen Speichern 8a bis 8d, (First-in-First-out-Speicher), die jeweils die Adressen der Mengenelemente speichern, wobei die Mengenelement-Signale als Schreibimpulse verwendet werden,
- aus den Speichern 8a bis 8d nachgeordneten Dilatoren 9a bis 9d zur Vergrößerung der als Mengenelemente markierten aktuellen Bildpunkte bzw. Pixel, wobei als Dilatoren Look-up-Tabellen vorgesehen sein können, die für jede Adresse eine vorgegebene Anzahl von weiteren Adressen generieren,
- aus den Dilatoren 9a bis 9d nachgeordneten Karten-Speichern 10a bis 10d zur Speicherung der vergrößerten bzw. dilatierten, adressierten Mengenelemente, und
- aus einem an die Ausgänge der Karten-Speicher 10a bis 10d angeschlossenen Und-Glied 11, an dessen Ausgang der Ausgangsspeicher 12 der Auswerteeinheit angeschlossen ist, um die Koordinatenwerte der detektierten Bildpunkte im Ausgangsspeicher 12, z. B. einem First-in-First-out-Speicher, zu speichern.

Jeder der als Mengenelement markierten Bildpunkte bzw. Pixel eines Filterzweiges wird durch Einbeziehung von nächsten Nachbarschaftspunkten bzw. -pixeln vergrößert. Durch diesen Verfahrensschritt wird die endgültige Entdeckungswahrscheinlichkeit der Objekte erhöht, weil natürliche Szenen nie frei von Rauschen sind und die Objekte nicht immer perfekte Symmetrien aufweisen. Beispielsweise kann jeder als Mengenelement markierte Bildpunkt bzw. Pixel eines Filterzweiges durch insgesamt acht Nachbarschaftspunkte bzw. -pixel vergrößert werden. Es können die auf zwei senkrecht zueinander angeordneten Linien und auf den zugehörigen Diagonalen liegenden acht Bildpunkte bzw. Pixel als nächste Nachbarschaftspunkte bzw. -pixel ausgewählt werden.

Durch das erfindungsgemäße Verfahren wird die Anzahl der als Mengenelemente markierten aktuellen Bildpunkte bzw. Pixel (Objekte) auf die wichtigsten begrenzt, wobei eine benötigte Datenreduktion für eine weitere Bildverarbeitung erreicht wird. Die oberen und unteren Schranken, die von der Bildgröße als Systemkonstante abhängen, werden vorteilhafterweise nur einmal für das System bestimmt und eingestellt. Weitere Parameter müssen nicht justiert werden. Die dynamischen Schwellwerte der vier Regelprozessoren da bis 4d können nur zwischen zwei Grenzwerten $T_{max}$, $T_{min}$ gemäß K4 erhöht oder erniedrigt werden. Hierdurch wird eine extrem hohe Empfindlichkeit, falls das Bild leer ist, und eine unnötig hohe Datenreduktion, falls das Bild voller interessanter Objekte ist, vermieden.

Mögliche Anwendungsbeispiele sind nachstehend aufgelistet, wobei die Eingangsbilder von verschiedenen Quellen kommen können wie z. B. normale Video-Kameras, Röntgenphotos, Infrarot-Bilder, Ultraschall-Bilder, optische Mikroskope, Elektronen-Mikroskope etc.

a) Detektion und Überwachung von kleinen lebenden Organismen mit Symmetrien in biologischer, medizinischer und normaler Umwelt (Testumgebungen).
b) Detektion von kleinen Defekten in der Produktionsindustrie, z. B. Unreinheiten in Metall, Kristall, Chemiesubstanzen, optischen Komponenten etc.
c) Überwachung der Anwesenheit oder Abwesenheit von Gas-Blasen-Formationen in chemischen Reaktoren.
d) Entdeckung und Regelung der An- oder Abwesenheit von Bohrlöchern bei der Herstellung von mechanischen Komponenten (Metall-Teile, PC-Boards etc.)
e) Entdeckung und Überwachung von natürlichen oder vom Menschen erzeugten Katastrophen lokaler Natur von Erdbeobachtungssatelliten (Waldbrände, Ölfeldbrände etc.)
f) Detektion von dünnen Brüchen (Rissen) in Material oder kritischen Konstruktionen wie in Kernreaktoren, Brücken etc. Die Detektion von Rissen ist eine interessante Anwendung des allgemeinen Verfahrens, da für diesen Fall nämlich einige der Teillösungsmengen der Symmetrieregeln ausgeschlossen werden müssen, wenn die logische Endverknüpfung durchgeführt wird.
g) Registrierung von Elementarpartikelspuren im Bereich Hochenergiephysik.
h) Detektion von punktförmigen Objekten in IR-Bildern für die Gebäudeüberwachung.

**Patentansprüche**

1. Verfahren zur Detektion von kleinen Objekten in natürlicher Umgebung unter Verwendung eines die Umgebung abtastenden elektrooptischen Sensors mit nachgeordneter Auswerteeinheit (12) und gegebenenfalls vorgesehener Bilddarstellungseinrichtung, gekennzeichnet durch die Schritte:

a) Filtern eines von dem Sensor gelieferten digitalen Bilds in mindestens drei nichtlinear arbeitenden Filter-Zweigen, beginnend mit Maximum-Minimum-Filtern (3a bis 3d), die jeweils innerhalb einer mehrere Pixel enthaltenden Matrix wirken, wobei jede Matrix eine Referenzmenge außerhalb des zugehörigen Matrixmittelpunkts umfaßt und sich die Referenzmengen der jeweiligen Matrizen voneinander unterscheiden, und Ermitteln des Maximums und Minimums der Helligkeitswerte von jeder Referenzmenge,
b) Markieren des dem jeweiligen Matrixmittelpunkt entsprechenden Pixels (P), wenn ein Kriterium K1 erfüllt ist, d.h. dieses Pixel (P) um einen dynamischen Schwellwert (T) heller als das Maximum der Helligkeitswerte der zugehörigen Referenzmenge (M) ist, und ein Kriterium K2 erfüllt ist, d.h. ob die Streuung (M-m) der zugehörigen Referenzmenge kleiner als ein vorgegebener fester Schwellenwert (L) ist, wobei als Maß für die Streuung der Helligkeitswerte hier die Differenz von Maximum (M) und Minimum (m) verwendet wird,
c) Bestimmen der Anzahl der als Mengenelemente markierten Pixel für ein vollständiges Bild und Vergleichen der aktuellen Zählergebnisse (n) mit festen oberen und unteren Schranken $N_{max}$ und $N_{min}$, und Regeln der jeweiligen dynamischen Schwellwerte T unter Verwendung eines Kriteriums K3 ($N_{min} < n < N_{max}$) derart, daß

- der Schwellwert T erhöht wird, wenn die aktuellen Zählergebnisse n größer als eine vorgegebene obere Schranke $N_{max}$ sind,
- der Schwellwert T erniedrigt wird, wenn die aktuellen Zählergebnisse n kleiner als eine vorgegebene untere Schranke $N_{min}$ sind, und
- der Schwellwert T unverändert bleibt, wenn die aktuellen Zählergebnisse n innerhalb des von der oberen und unteren vorgegebenen Schranke ($N_{max}$, $N_{min}$) definierten Bereichs liegen oder gleich der unteren bzw. oberen vorgegebenen Schranke ($N_{max}$, $N_{min}$) sind,

und

d) Dilatieren jedes als Mengenelement markierten Pixels, so daß jedes als Mengenelement markierte Pixel um seine Nachbarpixel vergrößert wird und ein dilatiertes Mengenelement darstellt, und UND-Verknüpfen der aus einer Referenzmenge gewonnenen dilatierten Mengenelemente mit den anderen jeweils aus einer Referenzmenge hervorgegangenen dilatierten Mengenelemente zu einem Endergebnis, und Speichern der Koordinatenwerte aller so detektierten Pixel in einem Ausgangsspeicher (12) der Auswerteeinheit.

2. Verfahren nach Anspruch 1, gekennzeichnet durch den Schritt Vorfiltern des digitalen Bilds zum Glätten eines Rauschens des digitalisierten Eingangsbilds.

3. Verfahren nach Anspruch 1 oder 2, gekennzeichnet durch den Schritt Vergrößern jedes als Mengenelement markierten Pixels durch insgesamt acht Nachbarschaftspixel.

4. Verfahren nach Anspruch 3, gekennzeichnet durch den Schritt Auswählen von auf zwei senkrecht zueinander angeordneten Linien und auf den zugehörigen Diagonalen liegenden acht Pixel als nächste Nachbarschaftspixel.

5. Verfahren nach einem der Ansprüche 1 bis 4, dadurch gekennzeichnet, daß in Schritt a) insgesamt vier Referenzmengen verwendet werden, deren Maxima und Minima von vier nichtlinearen Maximum-Minimum-Filtern (3a bis 3d) ermittelt werden, um diese Werte in folgenden Regelprozessoren (4a bis 4d) zur Erzeugung der markierten Pixel in Schritt b) zu verwenden.

6. Verfahren nach Anspruch 5, dadurch gekennzeichnet, daß vier an den Ecken einer quadratischen Matrix angeordnete Gruppen von Pixeln als Referenzmengen verwendet werden.

7. Verfahren nach einem der Ansprüche 1 bis 6, dadurch gekennzeichnet, daß als Maß für die Streuung an Stelle der Differenz zwischen Maximum und Minimum die Varianz der Pixel verwendet wird.

8. Schaltungsanordnung zur Detektion von kleinen Objekten in natürlicher Umgebung unter Verwendung einer die Umgebung abtastenden elektrooptischen Sensors mit nachgeordneter Auswerteeinheit und gegebenenfalls vorgesehener Bilddarstellungseinrichtung, dadurch gekennzeichnet, daß

dem ein digitales Bild liefernden elektrooptischen Sensor eine einer untersuchten Zahl von Referenzmengen entsprechende Anzahl von parallel angeordneten Maximum-Minimum-Filtern (3a bis 3d) zur Ermittlung der Maxima und Minima der Helligkeitswerte der zugehörigen Referenzmengen nachgeordnet ist,
die Ausgänge der Maximum-Minimum-Filter (3a bis 3d) an die Eingänge von jeweils einem nachgeordneten Regelprozessor (4a bis 4d) zur Ermittlung der Anzahl markierter Pixel des digitalen Bilds angeschlossen sind,
die Ausgänge der Regelprozessoren (4a bis 4d) einerseits an jeweils einen Zähler (5a bis 5d) zur Bestimmung der aktuellen Zählergebnisse (n) zwecks Vergleichs der aktuellen Zählergebnisse mit einer oberen und unteren Schranke ($N_{max}$, $N_{min}$) und zur Regelung eines jeweiligen dynamischen Schwellwerts (T) in den Regelprozessoren (4a bis 4d) und andererseits an die Eingänge eines Ergebnisprozessors (6) zur Erweiterung der den jeweiligen Matrixmittelpunkten entsprechenden markierten Pixel um markierte Nachbarschaftspixel zu dilatierten Mengenelementen und zur UND-Verknüpfung der dilatierten Mengenelemente zu einer Endergebnis-Menge angeschlossen sind,

und

im Ergebnisprozessor (6) ein Ausgangsspeicher (12) zur Speicherung der Koordinatenwerte aller Endergebniselemente angeordnet ist.

9. Schaltungsanordnung nach Anspruch 8, dadurch gekennzeichnet, daß vor den Maximum-Minimum-Filtern (3a bis 3d) ein Vorfilter (1) und eine Zeitverzögerungsschaltung (2) angeordnet sind.

10. Schaltungsanordnung nach Anspruch 8 oder 9, dadurch gekennzeichnet, daß der Ergebnisprozessor (6) aus:

- einem Adressen-Generator (7),
- an den Ausgang des Adressengenerators (7) angeschlossenen Speichern (8a bis 8d), deren Zahl der Anzahl von Referenzmengen entspricht und die jeweils die Adresse der Mengenelemente speichern,
- den Speichern (8a bis 8d) nachgeschalteten Dilatoren (9a bis 9d) zur Vergrößerung der als Mengenelemente markierten Pixel,
- den Dilatoren (9a bis 9d) nachgeordneten Karten-Speichern (10a bis 10d) zur Speicherung der vergrößerten, adressierten Mengenelemente, und
- einem an die Ausgänge der Karten-Speicher (10a bis 10d) angeschlossenen UND-Glied (11), an dessen Ausgang der Ausgangsspeicher (12) der Auswerteeinheit angeschlossen ist,

besteht.

11. Schaltungsanordnung nach Anspruch 8, 9 oder 10, dadurch gekennzeichnet, daß First-in-First-Out-Speicher vorgesehen sind.

12. Schaltungsanordnung nach Anspruch 10, dadurch gekennzeichnet, daß als Dilatoren (9a bis 9d) Look-up-Tabellen vorgesehen sind, die für jede Adresse eine vorgegebene Anzahl von weiteren Adressen generieren.

**Claims**

1. A procedure for the detection of small objects in their natural surroundings using an electrooptic sensor which scans the surroundings, with an evaluation unit (12) connected downstream and optionally with the provision of an image display device, characterised by the steps of:

a) filtering a digital image supplied by the sensor in at least three filter branches which operate nonlinearly, commencing with maximum-minimum filters (3a to 3d), which each act within a matrix containing a plurality of pixels, wherein each matrix comprises a reference quantity outside the associated matrix mid-point and the reference quantities of the respective matrices differ from each other, and determining the maximum and minimum of the brightness values of each reference quantity,

b) marking the pixel (P) corresponding to the respective matrix mid-point if a criterion K1 is fulfilled, namely that this pixel (P) is brighter by a dynamic threshold value (T) than the maximum of the brightness values of the associated reference quantity (M), and if a criterion K2 is fulfilled, namely whether the scatter (M-m) of the associated reference quantity is less than a predetermined fixed threshold value (L), the difference between the maximum (M) and minimum (m) being used here as a measure of the scatter of the brightness values,

c) determining the number of pixels marked as quantity elements for a complete image and comparing the relevant counting results (n) with fixed upper and lower bounds $N_{max}$ and $N_{min}$, and adjusting the respective dynamic threshold values T using a criterion K3 ($N_{min} < n < N_{max}$) so that

- the threshold value T is increased if the relevant counting results n are greater than a predetermined upper bound $N_{max}$,
- the threshold value T is decreased if the relevant counting results n are less than a predetermined lower bound $N_{min}$, and
- the threshold value T remains unchanged if the relevant counting results n fall within the range defined by the predetermined upper and lower bounds ($N_{max}$, $N_{min}$) or are equal to the predetermined lower or upper bounds ($N_{max}$, $N_{min}$),

and

d) dilating each pixel marked as a quantity element so that each pixel which is marked as a quantity element is enlarged by its neighbouring pixel and constitutes a dilated quantity element, performing an AND operation on the dilated quantity elements obtained from one reference quantity and the other dilated quantity elements which each originate from a reference quantity, to form a final result, and storing the coordinate values of all the pixels detected in this manner in an output memory (12) of the evaluation unit.

2. A procedure according to claim 1, characterised by the step of pre-filtering the digital image in order to smooth out noise from the digitalised input image.

3. A procedure according to claims 1 or 2, characterised by the step of enlarging each pixel marked as a quantity element by a total of eight neighbouring pixels.

4. A procedure according to claim 3, characterised by the step of selecting two lines disposed perpendicularly to each other and selecting eight pixels lying on the associated diagonals as the nearest neighbouring pixels.

5. A procedure according to any one of claims 1 to 4, characterised in that in step a) a total of four reference quantities is used, the maxima and minima of which are determined by four nonlinear maximum-minimum filters (3a to 3d), in order to use these values in subsequent rule processors (4a to 4d) for generating the marked pixels in step b).

6. A procedure according to claim 5, characterised in that four groups of pixels disposed at the corners of a square matrix are used as reference quantities.

7. A procedure according to any one of claims 1 to 6, characterised in that the variance of the pixels, instead of the difference between the maximum and minimum, is used as a measure of the scatter.

8. A circuit arrangement for the detection of small objects in their natural surroundings using an electrooptic sensor which scans the surroundings, with an evaluation unit connected downstream and optionally with the provision of an image display device, characterised in that

in order to determine the maxima and minima of the brightness values of the associated reference quantities, a number of maximum-minimum filters (3a to 3d) which corresponds to a number of reference quantities investigated, which filters are connected in parallel, is connected downstream of the optical sensor which supplies a digital image,

the outputs of the maximum-minimum filters (3a to 3d) are connected to the inputs of a rule processor (4a to 4d) which is connected downstream in each case in order to determine the number of marked pixels of the digital image, the outputs of the rule processors (4a to 4d) are each connected firstly to a counter (5a to 5d) for the determination of the relevant counting results (n) for the purpose of comparing the relevant counting results with an upper and lower bound ($N_{max}$, $N_{min}$) and for the adjustment of a respective dynamic threshold value (T) in each of the rule processors (4a to 4d) and are connected secondly to the inputs of an events processor (6) for the enlargement of the marked pixels, which correspond to the respective matrix mid-points, by marked neighbouring pixels to form dilated quantity elements, and in order to perform an AND operation on the dilated quantity elements to form a final result quantity,

and

an output memory (12) for storing the coordinate values of all the final result elements is disposed in the events processor (6).

9. A circuit arrangement according to claim 8, characterised in that a pre-filter (1) and a time delay circuit (2) are disposed upstream of the maximum-minimum filters (3a to 3d).

10. A circuit arrangement according to claim 8 or 9, characterised in that the events processor (6) consists of:

- an address generator (7),
- memories (8a to 8d) which are connected to the output of the address generator (7), and the number of which memories corresponds to the number of reference quantities and each of which memories stores the address of the quantity elements,
- dilators (9a to 9d) connected downstream of the memories (8a to 8d), for enlarging the pixels marked as quantity elements,
- map memories (10a to 10d) connected downstream of the dilators (9a to 9d), for storing the enlarged, addressed quantity elements, and
- an AND gate (11) connected to the outputs of the map memories (10a to 10d), to the output of which AND gate the output memory (12) of the evaluation unit is connected.

11. A circuit arrangement according to claims 8, 9 or 10, characterised in that first-in first-out memories are provided.

12. A circuit arrangement according to claim 10, characterised in that look-up tables, which generate a predetermined number of further addresses for each address, are provided as dilators (9a to 9d).

**Revendications**

1. Procédé de détection de petits objets dans un environnement naturel moyennant l'utilisation d'un capteur éléctro-optique qui balaie l'environnement et qui comporte, à son aval, une unité de traitement (12) et éventuellement un dispositif de présentation graphique, caractérisé par les étapes :

a) filtrage d'une image numérique délivrée par le capteur dans au moins trois branches de filtrage fonctionnant de manière non linéaire, commençant par des filtres de maxima et minima (3a à 3d) qui agissent à chaque fois dans une matrice contenant plusieurs pixels, chaque matrice comportant un ensemble de référence en dehors du centre de matrice associé et les ensembles de référence des matrices respectives se différenciant les uns des autres, et calcul du maximum et du minimum des valeurs de luminosité de chaque ensemble de référence ;
b) marquage du pixel (P) correspondant au centre de matrice concerné, lorsqu'un critère K1 est rempli, c'est-à-dire lorsque ce pixel (P) est plus clair d'une valeur seuil dynamique (T) que le maximum des valeurs de luminosité de l'ensemble de référence associé (M), et lorsqu'un critère K2 est rempli, c'est-à-dire lorsque la dispersion (M-m) de l'ensemble de référence associé est inférieure à une valeur seuil fixe (L) définie à l'avance, la mesure de la dispersion des valeurs de luminosité ayant lieu ici par utilisation de l'écart entre le maximum (M) et le minimum (m) ;
c) détermination du nombre de pixels d'une image complète marqués comme éléments d'ensemble et comparaison des résultats de comptage courants (n) aux limites fixes supérieure et inférieure $N_{max}$ et $N_{min}$ et réglage des valeurs seuils dynamiques respectives T en utilisant un critère K3 ($N_{min} < n < N_{max}$) de sorte que :

- la valeur seuil T est augmentée lorsque les résultats de comptage courants n sont supérieurs à une limite supérieure définie à l'avance $N_{max}$,
- la valeur seuil T est diminuée lorsque les résultats de comptage courants n sont inférieurs à une limite inférieure définie à l'avance $N_{min}$, et
- la valeur seuil T reste inchangée lorsque les résultats de comptage courants n se situent dans le domaine défini par les limites supérieure et inférieure fixées à l'avance

($N_{max}$, $N_{min}$) ou sont égales à la limite inférieure ou à la limite supérieure fixées à l'avance ($N_{max}$, $N_{min}$) ;

et

d) dilatation de chaque pixel marqué comme élément d'ensemble, de sorte que chaque pixel marqué comme élément d'ensemble est agrandi de ses pixels contigus et représente un élément d'ensemble dilaté, et association par opération ET, en un résultat final, des éléments d'ensemble extraits d'un ensemble de référence aux autres éléments d'ensemble dilatés issus à chaque fois d'un ensemble de référence, et mémorisation, dans une mémoire de sortie (12) de l'unité de traitement, des valeurs de cordonnées de tous les pixels ainsi détectés.

2. Procédé selon la revendication 1, caractérisé par l'étape : filtrage préparatoire de l'image numérique afin de lisser un bruit de l'image d'entrée numérisée.

3. Procédé selon la revendication 1 ou 2, caractérisé par l'étape : agrandissement, à l'aide de huit pixels de voisinage au total, de chaque pixel marqué comme élément d'ensemble.

4. Procédé selon la revendication 3, caractérisé par l'étape : sélection, comme pixels de voisinage, de huit pixels situés sur deux lignes perpendiculaires entre elles et sur les diagonales associées.

5. Procédé selon l'une des revendications 1 à 4, caractérisé en ce que l'on utilise, au cours de l'étape a), au total quatre ensembles de référence dont les maxima et les minima sont déterminés par des filtres non linéaires de maxima et minima (3a à 3d) afin d'utiliser ces valeurs dans des microprocesseurs de réglage placés en aval (4a à 4d) pour créer les pixels marqués au cours de l'étape b).

6. Procédé selon la revendication 5, caractérisé en ce que l'on utilise comme ensembles de référence quatre groupes de pixels disposés dans les coins d'une matrice carrée.

7. Procédé selon l'une des revendications 1 à 6, caractérisé en ce que l'on utilise la variance des pixels comme mesure de la dispersion au lieu de l'écart entre le maximum et le minimum.

8. Circuit de détection de petits objets dans un environnement naturel moyennant l'utilisation d'un capteur éléctro-optique qui balaie l'environnement et qui comporte, à son aval, une unité de traitement et éventuellement un dispositif de présentation graphique, caractérisé en ce que :

un certain nombre, correspondant à un nombre d'ensembles de référence examinés, de filtres de maxima et minima (3a à 3d) disposés en parallèle et servant à déterminer les maxima et les minima des valeurs de luminosité des ensembles de référence associés sont placés en aval du capteur éléctro-optique délivrant une image numérique ;
les sorties des filtres de maxima et minima (3a à 3d) sont raccordées à chaque fois aux entrées d'un microprocesseur (4a à 4d) placé en aval servant à calculer le nombre de pixels marqués de l'image numérique ;
les sorties des microprocesseurs de réglage (4a à 4d) sont, d'une part, raccordées à chaque fois à un compteur (5a à 5d) servant à déterminer les résultats de comptage courants (n) à des fins de comparaison des résultats de comptage courants à des limites supérieure et inférieure ($N_{max}$, $N_{min}$) et à régler une valeur seuil dynamique propre (T) au sein des microprocesseurs de réglage (4a à 4d) et, d'autre part, sont raccordées aux entrées d'un microprocesseur de résultat (6) servant à élargir les pixels marqués, correspondant aux centres de matrice respectifs, de pixels de voisinage marqués pour les transformer en des éléments d'ensemble dilatés, et servant à associer par opération ET des éléments d'ensemble dilatés en un ensemble de résultat final ; et
en ce qu'une mémoire de sortie (12) servant à mémoriser les valeurs de coordonnées de tous les éléments de résultat final est disposée dans le microprocesseur de résultat (6).

9. Circuit de détection selon la revendication 8, caractérisé en ce qu'un filtre préparatoire (1) et un circuit de temporisation (2) sont disposés avant les filtres de maxima et minima (3a à 3d).

10. Circuit de détection selon la revendication 8 ou 9, caractérisé en ce que le microprocesseur de résultat (6) est constitué :

- d'un générateur d'adresses (7),
- de mémoires (8a à 8d), raccordées à la sortie du générateur d'adresses (7), dont le nombre correspond au nombre d'ensembles de référence et qui mémorisent à chaque fois l'adresse des éléments d'ensemble,
- de dilatateurs (9a à 9d), disposés en aval des mémoires (8a à 8d), servant à agrandir les pixels marqués comme éléments d'ensemble,
- de mémoires de cartes (10a à 10d), disposées en aval des dilatateurs (9a à 9d), servant à mémoriser les éléments d'ensemble agrandis adressés, et

- d'un circuit ET (11), raccordé aux sorties des mémoires de cartes (10a à 10d), à la sortie duquel la mémoire de sortie (12) de l'unité de traitement est raccordée.

11. Circuit de détection'selon la revendication 8, 9 ou 10, caractérisé en ce que des mémoires premier entré, premier sorti sont prévues.

12. Circuit de détection selon la revendication 10, caractérisé en ce que des tables à consulter qui génèrent pour chaque adresse un nombre d'adresses supplémentaires défini à l'avance sont prévues en tant que dilatateurs (9a à 9d).

Fig. 1

Input

3 x 3 FIR Filter 1

7 Line Delay 2

Line1
Line2

Max_Min Filter 1 3a
Max_Min Filter 2 3b
Max_Min Filter 3 3c
Max_Min Filter 4 3d

Rule Processor 1 4a
Rule Processor 2 4b
Rule Processor 3 4c
Rule Processor 4 4d

Counter 1 5a
Counter 2 5b
Counter 3 5c
Counter 4 5d

SYNC. IN

Events Processor 6

Output

FIG. 2

# EVENTS PROCESSOR

Fig. 3